(19) **Europäisches Patentamt / European Patent Office / Office européen des brevets**

(11) **EP 4 246 643 A1**

(12) **EUROPEAN PATENT APPLICATION**
published in accordance with Art. 153(4) EPC

(43) Date of publication:
**20.09.2023 Bulletin 2023/38**

(21) Application number: **21891781.3**

(22) Date of filing: **05.11.2021**

(51) International Patent Classification (IPC):
**H01M 10/0562** (2010.01)  **C01B 25/10** (2006.01)
**C01B 25/14** (2006.01)  **H01B 1/06** (2006.01)
**H01B 1/10** (2006.01)

(52) Cooperative Patent Classification (CPC):
**C01B 25/10; C01B 25/14; H01B 1/06; H01B 1/10; H01M 10/0562;** Y02E 60/10

(86) International application number:
**PCT/JP2021/040790**

(87) International publication number:
**WO 2022/102535 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2020 JP 2020188040**

(71) Applicant: **AGC INC.**
**Chiyoda-ku,**
**Tokyo 1008405 (JP)**

(72) Inventors:
• **FUJII, Naoki**
  **Tokyo 100-8405 (JP)**
• **NISHIZAWA, Manabu**
  **Tokyo 100-8405 (JP)**
• **HAYASHI, Hideaki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **SULFIDE BASED SOLID ELECTROLYTE, SOLID ELECTROLYTE LAYER, AND LITHIUM ION SECONDARY BATTERY**

(57)    The present invention pertains to a sulfide based solid electrolyte that is for use in a lithium ion secondary battery and that includes an argyrodite-type crystal structure containing Li, P, S, and Ha. The Ha is at least one kind selected from the group consisting of F, Cl, Br, and I. In a Raman spectrum, a peak is present in at least one selected from the group consisting of 140-170 $cm^{-1}$, 205-235 $cm^{-1}$, and 460-490 $cm^{-1}$. In a DSC curve, an endothermic peak is not present in the range of 70-160°C.

**EP 4 246 643 A1**

**Description**

TECHNICAL FIELD

The present invention relates to a sulfide solid electrolyte, a solid electrolyte layer, and a lithium-ion secondary battery.

BACKGROUND ART

Lithium-ion secondary batteries are widely used for a portable electronic device such as a mobile phone and a notebook computer.

In the past, a liquid electrolyte has been used in a lithium-ion secondary battery, but there is a concern of liquid leakage, ignition, and the like, and it has been necessary to increase the size of a case for safety design. It has also been desired to improve the battery life and the operating temperature range.

In contrast, attention has been paid to an all-solid-state lithium-ion secondary battery in which a solid electrolyte is used as an electrolyte of a lithium-ion secondary battery, from the viewpoint of improving safety, charge and discharge at a high speed, and reducing the size of a case.

The solid electrolytes are roughly classified into sulfide solid electrolytes and oxide solid electrolytes, and sulfide ions have higher polarizability and higher ion conductivity than oxide ions. As the sulfide solid electrolytes, LGPS crystals such as $Li_{10}GeP_2S_{12}$, argyrodite crystals such as $Li_6PS_5Cl$, LPS crystallized glasses such as $Li_7P_3S_{11}$ crystallized glass, and the like have been known.

Patent Literature 1 discloses an argyrodite sulfide solid electrolyte. The sulfide solid electrolyte disclosed in Patent Literature 1 has a cubic crystal structure belonging to a space group F-43m, and contains a compound represented by a composition formula: $Li_{7-x}PS_{6-x}Ha_X$ (where Ha represents Cl or Br) (where x = 0.2 to 1.8), and a lightness L value of an L* a* b* color system is 60.0 or more. This is intended to improve the charge/discharge efficiency and the cycle characteristics by increasing the lithium ion conductivity and decreasing the electron conductivity.

CITATION LIST

PATENT LITERATURE

Patent Literature 1: WO2015/012042

SUMMARY OF INVENTION

TECHNICAL PROBLEM

In the case where the sulfide solid electrolyte is used for a lithium-ion secondary battery or the like, a powdered sulfide solid electrolyte may be processed into a green compact having a pellet shape, a layer shape (sheet shape), or the like. However, a sulfide solid electrolyte having an argyrodite crystal structure is harder than, for example, a LPS crystallized glass, and is inferior in adhesion between powders.

In such an argyrodite sulfide solid electrolyte, it is necessary to apply a relatively large pressure in order to improve the lithium ion conductivity of the green compact by sufficiently adhering the powder. In addition, if a relatively large pressure is applied, the powder can be processed into a green compact. However, since the obtained green compact tends to be brittle, it is necessary to compensate for the adhesion by adding a binder or the like in order to maintain the strength of the green compact. In the case where the addition amount of the binder or the like increases, the proportion of the sulfide solid electrolyte in the green compact becomes relatively small, and the lithium ion conductivity of the green compact may decrease.

In view of the above, an object of the present invention is to provide a sulfide solid electrolyte in which a green compact exhibits a good lithium ion conductivity due to an excellent adhesion.

SOLUTION TO PROBLEM

As a result of intensive studies, the present inventors have found that in the case where sulfur is contained in an argyrodite crystal structure in a state of Ss in a sulfide solid electrolyte containing the argyrodite crystal structure, the sulfide solid electrolyte becomes relatively soft, and a sulfide solid electrolyte having an excellent adhesion when formed into a green compact can be obtained, and have completed the present invention.

That is, the present invention relates to the following [1] to [7].

[1] A sulfide solid electrolyte to be used in a lithium-ion secondary battery, the sulfide solid electrolyte including

an argyrodite crystal structure comprising Li, P, S, and Ha, in which Ha is at least one selected from the group consisting of F, Cl, Br, and I,
the sulfide solid electrolyte has a peak in at least one selected from the group consisting of 140 $cm^{-1}$ to 170 $cm^{-1}$, 205 $cm^{-1}$ to 235 $cm^{-1}$, and 460 $cm^{-1}$ to 490 $cm^{-1}$ in a Raman spectrum obtained by Raman spectroscopy measurement, and
the sulfide solid electrolyte does not have an endothermic peak within a range of 70°C to 160°C in a DSC curve obtained by differential scanning calorimetry.

[2] The sulfide solid electrolyte according to the above [1], in which the argyrodite crystal structure has a composition represented by LiaPSbHac (where $5 \leq a \leq 7$, $4 \leq b \leq 6$, and $0 < c \leq 2$).
[3] The sulfide solid electrolyte according to the above [1] or [2], in which a ratio IB/IA of a peak intensity (IA) at 420 $cm^{-1}$ to 440 $cm^{-1}$ to a peak intensity (IB) at 460 $cm^{-1}$ to 490 $cm^{-1}$ in the Raman spectrum is 0.005 or more.
[4] The sulfide solid electrolyte according to any one of the above [1] to [3], in which when the sulfide solid electrolyte is in a state of a powder having an average particle diameter of 2 $\mu$m to 10 $\mu$m,
a ratio $\sigma$ (30 kN)/$\sigma$ (10 kN) of a lithium ion conductivity $\sigma$ (30 kN) at 25°C when the powder is formed into a green compact under a pressure of 30 kN to a lithium ion conductivity $\sigma$ (10 kN) at 25°C when the powder is formed into a green compact at a pressure of 10 kN is 1.34 or less.
[5] The sulfide solid electrolyte according to any one of the above [1] to [4], having an elastic modulus of 5 GPa to 40 GPa.
[6] A solid electrolyte layer containing the sulfide solid electrolyte according to any one of the above [1] to [5].
[7] A lithium-ion secondary battery including the sulfide solid electrolyte according to any one of the above [1] to [5].

ADVANTAGEOUS EFFECTS OF INVENTION

According to the sulfide solid electrolyte of the present invention, the sulfide solid electrolyte has an excellent adhesion when formed into a green compact from a powder state, so that a green compact exhibiting a good lithium ion conductivity can be easily obtained. By using the sulfide solid electrolyte according to the present invention as a solid electrolyte for a lithium-ion secondary battery, an improvement in battery characteristics of the lithium-ion secondary battery can be expected.

DESCRIPTION OF EMBODIMENTS

Hereinafter, the present invention will be described in detail, but the present invention is not limited to the following embodiments, and can be freely modified and implemented without departing from the gist of the present invention. In addition, the symbol "-" or the word "to" that is used to express a numerical range includes the numerical values before and after the symbol or the word as the upper limit and the lower limit of the range, respectively. In the present specification, the sulfide solid electrolyte may be simply referred to as a "solid electrolyte". In the present specification, the ratios (percentage, etc.) based on weight are the same as the ratios (percentage, etc.) based on mass.

<Sulfide Solid Electrolyte>

A sulfide solid electrolyte according to an embodiment of the present invention (hereinafter, may be referred to as "the present solid electrolyte") is used for a lithium-ion secondary battery. The present solid electrolyte contains an argyrodite crystal structure containing Li, P, S, and Ha (hereinafter also referred to as "argyrodite crystal"). Here, Ha represents at least one selected from the group consisting of F, Cl, Br, and I. The present solid electrolyte has a binding peak of $S_8$ in a Raman spectrum obtained by Raman spectroscopy measurement, and does not have an endothermic peak attributed to phase transition or melting of sulfur in a DSC curve obtained by differential scanning calorimetry (DSC). That is, the present solid electrolyte has a peak in at least one selected from the group consisting of 140 $cm^{-1}$ to 170 $cm^{-1}$, 205 $cm^{-1}$ to 235 $cm^{-1}$, and 460 $cm^{-1}$ to 490 $cm^{-1}$ in the Raman spectrum, and does not have an endothermic peak within a range of 70°C to 160°C in the DSC curve.
The present solid electrolyte contains an argyrodite crystal structure containing Li, P, S, and Ha. The halogen element represented by Ha is at least one selected from the group consisting of F, Cl, Br, and I. The argyrodite crystal may contain only one kind of crystal having the same composition or two or more kinds of crystals having different compositions.
The halogen element is at least one selected from the group consisting of F, Cl, Br, and I, and in view that the crystal is likely to be an argyrodite crystal, at least one of Cl and Br is preferably contained, Cl is more preferably contained, and Cl simple substance or a mixture of Cl and Br is still more preferably contained.

The crystal structure can be analyzed based on a powder X-ray diffraction (XRD) pattern. In the case where peaks are present at positions of $2\theta = 15.7 \pm 0.5°$ and $30.2 \pm 0.5°$ in the XRD pattern, it can be said that the crystal is an argyrodite crystal. In addition to the above peaks, the XRD pattern preferably has a peak at a position of $2\theta = 18.0 \pm 0.5°$, and more preferably has a peak at a position of $2\theta = 25.7 \pm 0.5°$.

A preferable crystal structure is a cubic crystal (for example, F-43m), and a rhombohedral crystal, a tetragonal crystal, an orthorhombic crystal, or the like with reduced symmetry or a monoclinic crystal with further reduced symmetry may exist.

In the present solid electrolyte, the argyrodite crystal structure contains $S_8$ molecules in the crystal structure. The phrase "containing $S_8$ molecules in the crystal structure" includes not only a case where the $S_8$ molecules enter the inside of the crystal structure but also a case where the $S_8$ molecules exist outside the argyrodite crystal structure but are uniformly dispersed in grain boundaries between the crystals. That is, it is considered that, in the present solid electrolyte, the $S_8$ molecules are uniformly dispersed and exist in at least one of the inside of the crystal structure and the grain boundaries between crystals.

The $S_8$ molecular crystalline sulfur has a relatively low elastic modulus. That is, it can be said that the $S_8$ molecular structure is soft. Therefore, in the case where the $S_8$ molecules uniformly exist in the argyrodite crystal structure, the crystal is relatively soft, that is, the elastic modulus is small. Accordingly, the adhesion of the solid electrolyte can be improved.

In contrast, in a non-uniform state in which the argyrodite crystal and the $S_8$ molecules separately exist, that is, in the case where an area formed by gathering the $S_8$ molecules exists in the solid electrolyte, it is considered that a group of the $S_8$ molecules forms a resistive layer and prevents lithium ion conduction of the crystal. In addition, the elastic modulus in the area where the $S_8$ molecules gather tends to be locally low, and the strain tends to concentrate on such a portion. Therefore, it is considered that the existence of such an area makes it difficult to apply a uniform pressure to the solid electrolyte. That is, the present solid electrolyte contains the $S_8$ molecules uniformly in the crystal structure, so that the present solid electrolyte is a relatively soft and uniform crystal and also has an excellent lithium ion conductivity.

The present solid electrolyte has a binding peak of $S_8$ in the Raman spectrum obtained by Raman spectroscopy measurement. On the other hand, the present solid electrolyte does not have an endothermic peak attributed to phase transition or melting of sulfur in the DSC curve obtained by differential scanning calorimetry (DSC). The fact that the solid electrolyte has the binding peak of $S_8$ in the Raman spectrum means that the solid electrolyte contains the $S_8$ molecules. In contrast, the fact that the solid electrolyte does not have the endothermic peak of sulfur in the DSC curve means that, in the solid electrolyte, there is no sulfur which is separated from the argyrodite crystal structure and exists in a group of the $S_8$ molecules. The solid electrolyte having the area where $S_8$ is separated from the argyrodite crystal structure and the $S_8$ molecules exist in the group has an endothermic peak of sulfur in the DSC curve. Accordingly, in the case where the present solid electrolyte has the binding peak of $S_8$ in the Raman spectrum and does not have the endothermic peak attributed to the phase transition or melting of sulfur in the DSC curve, it can be determined that the present solid electrolyte contains the $S_8$ molecules in the crystal structure.

In addition, in a substance uniformly containing the $S_8$ molecules in the crystal structure like the present solid electrolyte, a difference also occurs in the particle size distribution after pulverization as compared with a non-uniform solid electrolyte in which an argyrodite crystal and $S_8$ exist separately. That is, in the present solid electrolyte, the variation in the particle diameter after pulverization tends to be small and the shape of the particle size distribution tends to be sharp. However, in the case of a non-uniform solid electrolyte, variation in the particle diameter after pulverization tends to increase, and the shape of the particle size distribution tends to be broad. The particle size distribution can be checked by measurement with a laser diffraction type particle size distribution meter.

Specifically, the binding peak of $S_8$ in the Raman spectrum refers to peaks at the Raman shifts derived from the S-S bindings of the $S_8$ molecules, i.e., 140 cm$^{-1}$ to 170 cm$^{-1}$, 205 cm$^{-1}$ to 235 cm$^{-1}$, and 460 cm$^{-1}$ to 490 cm$^{-1}$. That is, the present solid electrolyte has a peak in at least one selected from the group consisting of 140 cm$^{-1}$ to 170 cm$^{-1}$, 205 cm$^{-1}$ to 235 cm$^{-1}$, and 460 cm$^{-1}$ to 490 cm$^{-1}$ in the Raman spectrum.

The Raman spectrum obtained by the Raman spectroscopy measurement refers to a spectrum that does not particularly change depending on the measurement conditions, and is a spectrum obtained under conditions of a excitation light wavelength of 532 nm and a power of 1 mW to 3 mW under general conditions.

Specifically, the endothermic peak derived from the phase transition of sulfur in the DSC curve refers to an endothermic peak in a vicinity of 90°C to 115°C derived from a state change from $\alpha$ to $\beta$. Specifically, the endothermic peak derived from the melting of sulfur refers to an endothermic peak in a vicinity of 115°C to 140°C derived from a state change of sulfur from a solid to a liquid. Here, the term "in a vicinity of" is, for example, a range of $\pm 20$°C. Accordingly, it can be confirmed that the present solid electrolyte does not have an endothermic peak attributed to the phase transition or melting in the case where the solid electrolyte does not have an endothermic peak within a range of 70°C to 160°C in the DSC curve. In the case where $S_8$ is contained in the crystal structure as in the present solid electrolyte, it is considered that an argyrodite crystal is disposed immediately adjacent to the Ss molecules. Therefore, it is considered that such an endothermic peak is not confirmed since the Ss molecules do not combine thermodynamic state changes such as phase transition and melting.

In the present specification, the DSC curve obtained by the differential scanning calorimetry (DSC) refers to a curve obtained under conditions of a temperature rising rate of 5°C/min and a measurement temperature range of 25°C to 300°C.

The composition of the argyrodite crystal structure is represented by $Li_aPS_bHa_c$ (where $5 \leq a \leq 7$, $4 \leq b \leq 6$, and $0 < c \leq 2$).

Here, from the viewpoint of obtaining a high lithium ion conductivity, c indicating a content ratio of Ha is preferably 0.5 or more, more preferably 1 or more, and still more preferably 1.5 or more. From the viewpoint of preventing corrosion of the metal collector, c is preferably 1.9 or less, more preferably 1.8 or less, and still more preferably 1.7 or less.

The above $Li_aPS_bHa_c$ is a composition containing S of Ss in the crystal structure.

Here, since a general argyrodite crystal tends to lose sulfur, there is a tendency that a:b:c in the general argyrodite solid electrolyte is as follows:

$$(6 - x):(5 - x - y):(1 + x) \text{ (where y satisfies } 0 \leq y \leq 1).$$

(where y satisfies $0 \leq y \leq 1$).

On the other hand, since $S_8$ is added to the general argyrodite crystal in the present solid electrolyte, when the amount of $S_8$ is defined as z (where z satisfies $0 < z \leq 2$), a:b:c in the present solid electrolyte can be as follows:

$$(6 - x):(5 - x - y + z):(1 + x).$$

The composition can be analyzed by appropriately combining ICP emission spectroscopy, atomic absorption spectroscopy, ion chromatography, and the like.

In addition, the content of Ss in the present solid electrolyte can be evaluated by a ratio $I_B/I_A$ of a peak intensity $(I_A)$ derived from $PS_4^{3-}$ and observed at a position of 420 cm$^{-1}$ to 440 cm$^{-1}$ in the Raman spectrum to a peak intensity $(I_B)$ derived from $S_8$ and observed at a position of 460 cm$^{-1}$ to 490 cm$^{-1}$. In the Raman spectrum, the ratio $I_B/I_A$ of the peak intensity $(I_A)$ at 420 cm$^{-1}$ to 440 cm$^{-1}$ to the peak intensity $(I_B)$ at 460 cm$^{-1}$ to 490 cm$^{-1}$ is preferably 0.005 or more, more preferably 0.007 or more, and still more preferably 0.01 or more from the viewpoint of improving adhesion. In addition, the ratio $I_B/I_A$ is preferably 0.5 or less, and more preferably 0.3 or less from the viewpoint of preventing a decrease in lithium ion conductivity.

The crystallite size of the argyrodite crystal is preferably small from the viewpoint of obtaining a good lithium ion conductivity when the solid electrolyte is finely pulverized to form a battery, and specifically, the crystallite size is preferably 1,000 nm or less, more preferably 500 nm or less, and still more preferably 250 nm or less. The lower limit of the crystallite size is not particularly limited, and is generally 5 nm or more.

A crystallite size after a heat treatment is larger than that before the heat treatment, and the crystallite size is preferably within the above range even after the heat treatment.

The crystallite size can be calculated by using the Scherrer's equation for the half width of a peak in the XRD pattern.

As one of the criteria for evaluating the adhesion of the present solid electrolyte, when the present solid electrolyte is in a state of a powder having an average particle diameter of 2 $\mu$m to 10 $\mu$m, a ratio $\sigma$ (30 kN)/$\sigma$ (10 kN) of a lithium ion conductivity $\sigma$ (30 kN) when the powder is formed into a green compact at a pressure of 30 kN to a lithium ion conductivity $\sigma$ (10 kN) when the powder is formed into a green compact at a pressure of 10 kN can be used. Here, the average particle diameter refers to a D50 average particle diameter (median diameter: particle diameter at which the cumulative frequency is 50% on a volume basis). The average particle diameter is determined by, for example, an particle diameter distribution measuring device. In the present specification, the lithium ion conductivity $\sigma$ is a value at 25°C unless otherwise specified.

Depending on the use or the like, the present solid electrolyte that is a powder having an average particle diameter of 2 $\mu$m to 10 $\mu$m may be further finely crushed, so that the present solid electrolyte may be in a state of a powder having an average particle diameter of less than 2 $\mu$m. In this case, a value of a ratio $\sigma$' (30 kN)/$\sigma$' (10 kN) of a lithium ion conductivity $\sigma$' (30 kN) when the powder having an average particle diameter of less than 2 $\mu$m is formed into a green compact at a pressure of 30 kN to a lithium ion conductivity $\sigma$' (10 kN) when the powder having an average particle diameter of less than 2 $\mu$m is formed into a green compact at a pressure of 10 kN is larger than that of the ratio $\sigma$ (30 kN)/$\sigma$ (10 kN) when the solid electrolyte is in the state of a powder having an average particle diameter of 2 $\mu$m to 10 $\mu$m.

In the case where the solid electrolyte in the state of a powder is used after being processed into a green compact, the lithium ion conductivity of the green compact is improved as the powder particles adhere to each other. It is considered that this is because the grain boundary resistance at the interface between the powder particles is reduced as the contact interface between the particles is enlarged.

If the same powder is made into a green compact under a higher pressure, the adhesion is improved and the lithium ion conductivity is increased. However, in the case where the pressure is higher than a certain level, the lithium ion conductivity reaches an upper limit (maximum conductivity) at which the lithium ion conductivity does not become higher. It can be evaluated that the powder sufficiently adheres at a smaller pressure as the pressure required to obtain the maximum conductivity of the green compact is reduced, that is, the adhesion of the powder is good.

A powder for which a pressure required to obtain the maximum conductivity of the green compact is high can be processed into a green compact under a high pressure, but the obtained green compact tends to be brittle. In such a case, it is necessary to compensate for the adhesion by adding a binder or the like in order to maintain the strength of the green compact. In the case where the addition amount of the binder or the like increases, the proportion of the sulfide solid electrolyte in the green compact becomes relatively small, and the lithium ion conductivity of the green compact may decrease. Accordingly, in the case where the adhesion of the powder is good, not only the green compact can be easily made to have the maximum conductivity at a lower pressure, but also the proportion of the sulfide solid electrolyte in the green compact can be increased by reducing the addition amount of the binder or the like. As a result, the lithium ion conductivity of the green compact can be improved.

That is, the $\sigma$ (30 kN)/$\sigma$ (10 kN) is generally 1 or more, and it can be evaluated that the pressure required to obtain the maximum conductivity of the green compact is reduced as the value of the $\sigma$ (30 kN)/$\sigma$ (10 kN) is reduced, and close to 1. The $\sigma$ (30 kN)/$\sigma$ (10 kN) is preferably 1.34 or less, more preferably 1.32 or less, and still more preferably 1.3 or less.

In addition, the lithium ion conductivity $\sigma$ (30 kN) of the present solid electrolyte is preferably 0.1 mS/cm or more, more preferably 0.5 mS/cm or more, and still more preferably 1 mS/cm or more from the viewpoint of obtaining good battery characteristics when used for a lithium-ion secondary battery. The value of the $\sigma$ (30 kN) is preferably as large as possible, and the upper limit is typically about 100 mS/cm.

The elastic modulus of the present solid electrolyte is preferably 50 GPa or less, more preferably 40 GPa or less, and still more preferably 30 GPa or less from the viewpoint of improving adhesion. The elastic modulus is preferably 1 GPa or more, more preferably 2 GPa or more, and still more preferably 5 GPa or more from the viewpoint of maintaining the shape after molding. The elastic modulus can be measured using, for example, a nanoindenter.

The proportion of the argyrodite crystal structure in the present solid electrolyte is preferably 50 mass% or more, more preferably 65 mass% or more, and still more preferably 80 mass% or more, from the viewpoint of achieving a high lithium ion conductivity and from the viewpoint of more effectively obtaining the effects of the present invention. The upper limit is not particularly limited, and may be 100 mass%. Alternatively, the upper limit is generally 99 mass% or less. The proportion of the argyrodite crystal structure can be calculated by adding an internal standard substance, measuring with XRD or neutral-beam scattering, and then comparing a peak intensity with that of the internal standard substance.

Other than the argyrodite crystal, for example, $Li_3PS_4$, $Li_4P_2S_6$, $Li_2S$, and LiHa (where Ha is at least one halogen element selected from F, Cl, Br, and I) may be contained in the present solid electrolyte. Another lithium ion conductive solid electrolyte may be contained in the present solid electrolyte. Examples of the other lithium ion conductive solid electrolyte include a glass or a crystallized glass containing Li, P, and S.

However, in the case where the present solid electrolyte further contains a substance having a binding peak of Ss in the Raman spectrum or having an endothermic peak of sulfur in the DSC curve other than the argyrodite crystal containing Ss in the crystal structure, the present solid electrolyte is required to be specified after removing such a substance. The above case is, for example, a case where the present solid electrolyte further contains elemental sulfur (Ss) in addition to the argyrodite crystal. In the solid electrolyte in which the argyrodite crystal and Ss exist separately, the existing elemental sulfur (Ss) can be removed by, for example, a method of performing a heat treatment at 300°C for 1 hour.

<Method for Manufacturing Sulfide Solid Electrolyte>

A method for manufacturing the present solid electrolyte is not particularly limited as long as it is a method capable of obtaining a solid electrolyte having the characteristics described above, and examples thereof include a method including a step of heating and melting raw materials containing Li, P, S, and Ha (heating and melting step), in which the heating and melting is performed in a gas atmosphere containing a sulfur element.

In addition, the method for manufacturing the present solid electrolyte may further include, as appropriate, other steps such as a step of cooling a molten solution obtained by heating and melting (cooling step), a step of reheating a solid obtained by the cooling step (reheating step), a grinding step, and a drying step. Hereinafter, the steps will be described.

(Raw Materials)

The raw materials containing Li, P, S, and Ha may be known materials according to the related art as materials for obtaining an argyrodite crystal containing Li, P, S, and Ha.

Examples thereof include a mixture of a compound containing Li (lithium), a compound containing P (phosphorus), a compound containing S (sulfur), and a compound containing Ha (halogen).

Examples of the compound containing Li include lithium compounds such as lithium sulfide ($Li_2S$) and lithium oxide ($Li_2O$), and lithium metal simple substances.

Examples of the compound containing P include phosphorus sulfides such as phosphorus trisulfide ($P_2S_3$) and phosphorus pentasulfide ($P_2S_5$), and elemental phosphorus.

Examples of the compound containing S include lithium sulfide ($Li_2S$), phosphorus sulfides ($P_2S_3$ and $P_2S_5$), and hydrogen sulfide ($H_2S$), and elemental sulfur may also be used.

In the compound containing Ha, examples of a compound containing Cl (chlorine) include lithium chloride (LiCl).

In the compounds containing Ha, examples of a compound containing Br (bromine) include lithium bromide (LiBr).

Among them, as the raw material, a combination containing lithium sulfide, phosphorus sulfides, and at least one of lithium chloride and lithium bromide is preferable.

These raw materials are very unstable in the air, react with water and decomposed, and may generate hydrogen sulfide gas or be oxidized. Therefore, the raw materials are preferably mixed in an inert atmosphere.

The raw materials may contain, as an additive or the like, further substances (compounds or the like) in addition to the above substances.

For example, from the viewpoint of improving the glass formation state of the obtained sulfide solid electrolyte, the raw materials may contain sulfides such as $SiS_2$, $B_2S_3$, $GeS_2$, $Al_2S_3$, $Ga_2S_3$, $SnS_2$, $SnS$, and $ZnS_2$. From the viewpoint of imparting moisture resistance or the like, the raw materials may contain an oxide such as $SiO_2$, $B_2O_3$, $GeO_2$, $Al_2O_3$, $Ga_2O_3$, $SnO_2$, $SnO$, or $ZnO$. These compounds may be used alone or in combination of two or more kinds thereof.

The addition amount of these compounds is preferably 0.1 wt% or more, and more preferably 0.5 wt% or more, based on the total amount of the raw materials. The addition amount is preferably 50 wt% or less, and more preferably 40 wt% or less.

The raw materials can be mixed by, for example, mixing in a mortar, mixing using a medium, such as a planetary ball mill, and medium-less mixing such as a pin mill, a powder stirrer, and air flow mixing. The raw materials may be made amorphous by mixing before heating. For the purpose of obtaining an intermediate or the like, the raw materials may be subjected to a heat treatment before being heated and melted.

(Heating and Melting Step)

In the heating and melting step, the raw materials are heated and melted under a gas atmosphere containing a sulfur element.

The heating and melting is performed in the gas atmosphere containing a sulfur element. Examples of the gas containing a sulfur element include gases such as a sulfur gas, a hydrogen sulfide gas, and a carbon disulfide gas. From the viewpoint of efficiently introducing $S_8$ into the crystal structure, the sulfur gas is preferably contained.

The gas containing a sulfur element may be composed only of a gas compound containing a sulfur element, such as a sulfur gas, a hydrogen sulfide gas, and a carbon disulfide gas, or also preferably contains an inert gas such as a $N_2$ gas, an argon gas, and a helium gas from the viewpoint of reducing cost and from the viewpoint of using the gas as a carrier gas for conveying a sulfur component. In addition, the gas containing a sulfur element may contain impurities derived from a sulfur source or the like as long as the amount of the impurities is within a range in which the present solid electrolyte can be obtained.

The content of the sulfur gas ($S_x$ (where x = 2 to 8)) in the gas containing a sulfur element is preferably 0.01 vol% or more, more preferably 0.1 vol% or more, and still more preferably 0.2 vol% or more, from the viewpoint of providing a sufficient amount of sulfur elements and from the viewpoint of promoting the sulfur introduction reaction. In addition, the content of the sulfur gas is 100 vol% or less, and is preferably 99 vol% or less, and more preferably 98 vol% or less, from the viewpoint of cost reduction and the viewpoint of using an inert gas as a carrier gas. The content of the sulfur gas ($S_x$ (where x = 2 to 8)) can be measured by mass spectrometry gas chromatography.

The gas containing a sulfur element is obtained by heating the sulfur source. Therefore, the sulfur source is not particularly limited as long as it is elemental sulfur or a sulfur compound from which the gas containing a sulfur element is obtained by heating, and examples thereof include elemental sulfur, organic sulfur compounds such as hydrogen sulfide and carbon disulfide, iron sulfides (such as FeS, $Fe_2S_3$, $FeS_2$, and $Fe_{1-x}S$), bismuth sulfide ($Bi_2S_3$),

copper sulfides (such as CuS, $Cu_2S$, and $Cu_{1-x}S$), polysulfides such as lithium polysulfide and sodium polysulfide, polysulfides, and rubber subjected to a sulfur vulcanization treatment.

These sulfur sources are heated in a sulfur source heating unit that is separately provided to generate a gas containing a sulfur element, and the gas is conveyed to a heating and melting furnace using an inert gas such as a $N_2$ gas, an argon gas, and a helium gas as a carrier gas to obtain a gas atmosphere containing a sulfur element. By separating the sulfur source heating unit from a part for performing the heating and melting step, the oxygen or moisture can be removed by reacting with the sulfur gas even if oxygen or moisture is contained in the introduced gas. Therefore, a sulfide solid electrolyte having a good quality and a high purity with few impurities can be obtained.

The temperature at which the sulfur source is heated may be appropriately selected depending on the type of the sulfur source to be used, and for example, in the case where elemental sulfur is used as the sulfur source, the temperature is preferably 250°C or higher, and preferably 750°C or lower.

Alternatively, among the sulfur sources described above, $H_2S$ and a solid sulfur source such as elemental sulfur, $Bi_2S_3$, iron sulfides, copper sulfides, and $CS_2$ may be pneumatically conveyed in a fine state such as powder to a heating and melting furnace by a carrier gas to obtain a gas atmosphere containing a sulfur element.

Alternatively, it is also preferable to obtain a gas atmosphere containing a sulfur element by adjusting a mixing ratio of the above-described compound or simple substance so that sulfur becomes excessive in the raw materials and evaporating a part of the sulfur component in the raw materials during heating and melting.

For example, the heating and melting step is performed as follows. In a configuration in which the sulfur source heating unit and a part for performing the heating and melting step are separated, a sulfur source is heated in the sulfur source heating unit to generate a gas containing a sulfur element. A gas containing a sulfur element in an amount corresponding to the required partial sulfur pressure is fed to the part for performing the heating and melting step, and a gas atmosphere containing a sulfur element is obtained. Under this atmosphere, the raw materials are heated and melted. At this time, the partial sulfur pressure in the gas atmosphere containing a sulfur element is preferably $10^{-3}$ atm to $10^0$ atm.

By heating and melting the raw materials under the gas atmosphere containing a sulfur element, sulfur is introduced into the molten solution of the raw materials. Accordingly, it is possible to compensate for a sulfur component which easily volatilizes from the raw materials and to introduce a sufficient amount of sulfur into the present solid electrolyte.

At this time, the molten solution of the raw materials is decreased in viscosity by fluidization of a solid and is in a state of being highly uniform. Therefore, the solubility and diffusibility of the gas containing the sulfur element is high in the molten solution of the raw materials. By introducing sulfur in such a liquid phase state, it is considered that not only the sulfur component constituting the crystal is simply supplemented, but also $S_8$ is introduced into the crystal structure to obtain the present solid electrolyte. In addition, by introducing sulfur in the liquid phase state, the homogeneity in the composition of the obtained solid electrolyte is easily improved, and Ss can be uniformly dispersed and contained in the crystal structure. As described above, the case of "Ss is contained in the crystal structure" includes not only a case where $S_8$ enters the inside of the crystal structure and is contained therein but also a case where Ss exists outside the argyrodite crystal structure but is contained in a state of being uniformly dispersed in grain boundaries between the crystals.

Further, it is preferable to perform heating and melting while stirring a molten solution or a gas containing a sulfur element, because the effect of sulfur introduction and the effect of improving homogeneity are more easily obtained.

The heating and melting temperature is preferably 600°C or higher, more preferably 630°C or higher, and still more preferably 650°C or higher, in order to increase the fluidity of the molten solution and promote the sulfur introduction reaction. In addition, the heating and melting temperature is preferably 900°C or lower, more preferably 850°C or lower, and still more preferably 800°C or lower, from the viewpoint of preventing deterioration or decomposition due to heating of the components in the molten solution.

The heating and melting time is preferably 0.1 hours or more, more preferably 0.5 hours or more, still more preferably 0.7 hours or more, and yet still more preferably 1 hour or more in order to promote the sulfur introduction reaction. In addition, from the viewpoint of preventing deterioration or decomposition due to heating of the components in the molten solution, the heating and melting time is preferably 10 hours or less, more preferably 9.5 hours or less, and still more preferably 9 hours or less.

The pressure during heating and melting is not particularly limited, and for example, a normal pressure to a slight pressure is preferable, and a normal pressure is more preferable. In addition, it is preferable that the partial sulfur pressure be set to $10^{-3}$ atm to $10^0$ atm. By setting the partial sulfur pressure to such a value, the device is not complicated, sulfur can be efficiently introduced at low cost, and the target sulfide solid electrolyte is easily obtained.

From the viewpoint of preventing side reactions with water vapor, oxygen, and the like during heating and melting, the dew point is preferably -20°C or lower. The lower limit is not particularly limited, and is generally about -80°C. The oxygen concentration is preferably 1,000 ppm (volume basis) or less.

A specific method during heating and melting is not particularly limited, and examples thereof include a method in which raw materials are charged into a heat-resistant container and heated in a heating furnace. The heat-resistant container is not particularly limited, and examples thereof include a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide. These heat-resistant containers may be a container in which a bulk is formed of the above-described material, or a layer of carbon, an oxide, a nitride, a carbide, or the like is formed. The heating may be performed in a vacuum-sealed state.

(Cooling Step)

The method for manufacturing the present solid electrolyte preferably further includes a step of obtaining a solid by cooling the molten solution obtained by the heating and melting. The cooling may be performed by a known method, and the method is not particularly limited.

A cooling rate is preferably 0.01°C/sec or more, more preferably 0.05°C/sec or more, and still more preferably 0.1°C/sec or more, from the viewpoint of maintaining the composition obtained by the heating and melting step. The upper limit of the cooling rate is not particularly limited, and the cooling rate of a twin roller, whose cooling rate is generally said to be the highest, is 1,000,000°C/sec or less.

Here, in the case where the obtained solid is desired to be an amorphous sulfide solid electrolyte, it is preferable to obtain a solid by rapidly cooling the molten solution obtained by heating and melting. Specifically, the cooling rate in the case of rapid cooling is preferably 500°C/sec or more, and more preferably 700°C/sec or more. The upper limit of the cooling rate is not particularly limited, and the cooling rate of a twin roller, whose cooling rate is generally said to be the highest, is 1,000,000°C/sec or less.

It is possible to perform a slow cooling in the cooling step to crystallize at least a part of a solid, and to obtain a sulfide solid electrolyte having a desired crystal structure or a sulfide solid electrolyte composed of a crystal phase and an amorphous phase. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be appropriately adjusted according to the crystallization conditions.

(Reheating Step)

The amorphous sulfide solid electrolyte or the sulfide solid electrolyte containing the amorphous phase can be heated (post-annealed) to promote high-temperature crystallization. In the method for manufacturing the present solid electrolyte, in the case where the solid obtained in the cooling step is the amorphous sulfide solid electrolyte, the solid is reheated to obtain the sulfide solid electrolyte containing a crystal phase. Alternatively, in the case where the solid obtained in the cooling step is, for example, the sulfide solid electrolyte containing an amorphous phase and a crystal phase, the method may also further include reheating the solid as necessary.

The method for manufacturing the present solid electrolyte may include steps of pulverizing and drying the sulfide solid electrolyte obtained in the above steps, depending on the use of the sulfide solid electrolyte to be obtained. In any case, the specific method is not limited, and any known method may be used.

(Solid Electrolyte Layer, and Lithium-Ion Secondary Battery)

The present solid electrolyte has an excellent adhesion when the present solid electrolyte is formed into a green compact from a powder state, and therefore, a good lithium ion conductivity can be obtained when the present solid electrolyte is processed into a green compact having a pellet shape, a layer shape (sheet shape), or the like.

Therefore, the present solid electrolyte can be preferably used for a solid electrolyte layer to be used for a lithium-ion secondary battery. The solid electrolyte layer may contain other components such as a binder as necessary. As the binder or other components, known substances according to the related art are used.

The content of the solid electrolyte relative to the entire solid electrolyte layer is preferably 80 mass% or more, and more preferably 90 mass% or more. The present solid electrolyte has an excellent adhesion, and therefore, the content of components to be added to compensate for the adhesion of the binder or the like can be made relatively small, and the lithium ion conductivity of the solid electrolyte layer is easily improved.

As a method for forming the solid electrolyte layer, a known method according to the related art is used. For example, the solid electrolyte layer can be formed by press-molding a solid electrolyte powder or the like on a surface of a positive electrode or a negative electrode by a dry method. In addition, the components constituting the solid electrolyte layer may be dispersed or dissolved in a solvent to form a slurry, and the slurry may be applied in the form of a layer (sheet shape), dried, and freely pressed. Alternatively, the solid electrolyte layer may be formed on another base material and transferred onto a surface of a positive electrode, a negative electrode, or the like.

Even in the case where the solid electrolyte layer is formed by any method, in the solid electrolyte layer including the present solid electrolyte, the adhesion between the particles of the solid electrolyte powder in the layer or between the particles of the solid electrolyte powder and other components is improved, and therefore, the lithium ion conductivity is easily improved.

The present solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art are used. In the positive electrode layer or the negative electrode layer, by using the present solid electrolyte, the adhesion between the particles of the solid electrolyte powder in the layer or between the particles of the solid electrolyte powder and other components is also improved, and therefore, the lithium ion conductivity is easily improved.

The configuration of the lithium-ion secondary battery including the present solid electrolyte is not particularly limited, and examples thereof include an all-solid-state lithium-ion secondary battery including a solid electrolyte layer, a positive electrode layer, and a negative electrode layer, at least one of which contains the present solid electrolyte. According to the lithium-ion secondary battery including the present solid electrolyte, the adhesion between the particles of the solid electrolyte powder or between the particles of the solid electrolyte powder and other components battery is improved in the lithium-ion secondary. Therefore, lithium ion conductivity is easily improved and battery characteristics are expected to be improved.

As the material of an outer casing of the lithium-ion secondary battery, known materials according to the related art may also be used. As the shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

EXAMPLES

Hereinafter, the present invention will be specifically described with reference to Examples, but the present invention is not limited thereto. Examples 1 to 5 are inventive examples, and Examples 6 to 9 are comparative examples.

[Evaluation]

(Powder X-ray Diffraction)

An XRD spectrum was obtained by performing XRD measurement under the following conditions, and the crystal structure was analyzed.

Device: SmartLab manufactured by Rigaku Corporation
Radiation Source: CuK$\alpha$ ray ($\lambda$ = 1.5418 Å), scanning angle: 10° to 100°, scanning speed: 5°/ min, number of steps: 0.01°/step.

The sulfide solid electrolyte serving as the measurement sample deteriorated when exposed to the air, so that the sample was prepared in an atmosphere not exposed to the air and used for the measurement.
Sample Preparation: The sulfide solid electrolyte powder pulverized in a mortar was passed through a sieve having an opening of 100 $\mu$m to prepare a sulfide solid electrolyte powder having a particle size distribution with an average particle diameter of 5 $\mu$m to 10 $\mu$m. The particle size distribution was measured using a laser diffraction particle size distribution analyzer MT 3300 EXII manufactured by Microtrac, and the average particle diameter was measured based on a chart of the obtained volume-based particle size distribution.

(Composition Analysis)

A solid electrolyte powder weighed in a glove box was dissolved in an alkaline aqueous solution, and the elements P and S were subjected to ICP emission spectroscopic analysis, the element Li was subjected to analysis based on atomic absorption spectroscopy, and the elements Cl and Br were subjected to analysis based on ion chromatography to perform composition analysis.

(Raman Spectrometry Measurement)

A Raman spectrum was obtained by performing Raman spectroscopy measurement under the following conditions, and the presence or absence of an $S_8$ binding peak was checked. The measurement was performed in an environment not exposed to the air.

In Table 1, in the case where peaks were confirmed in at least one of Raman shifts of 140 cm$^{-1}$ to 170 cm$^{-1}$, 205 cm$^{-1}$ to 235 cm$^{-1}$, and 460 cm$^{-1}$ to 490 cm$^{-1}$, the $S_8$ binding peak was evaluated as "Yes". On the other hand, in the case where these peaks were not confirmed, the Ss binding peak was evaluated as "No". In addition, regarding the examples of the Ss binding peak evaluated as "Yes", a ratio $I_B/I_A$ of a peak intensity ($I_B$) derived from Ss at 460 cm$^{-1}$ to 490 cm$^{-1}$ to a peak intensity ($I_A$) derived from $PS_4^{3-}$ at 420 cm$^{-1}$ to 440 cm$^{-1}$ was calculated based on the obtained Raman spectrum.

Device Name: LabRAM HR Evolution, manufactured by Horiba Ltd.
Excitation light wavelength: 532 nm, power during sample irradiation: 1 mW to 3 mW, objective lens: ×10, confocal pinhole: 200 $\mu$m, grating: 1,200 gr/mm, number of integrations: 2 secs × 10 times, average number of measurement points: 10 points.

(DSC Measurement)

DSC measurement was performed using a differential scanning calorimeter under the following conditions to obtain a DSC curve, and the presence or absence of an endothermic peak of sulfur within a range of 70°C to 160°C was checked.

In Table 1, in the case where the endothermic peak of sulfur was confirmed, the endothermic peak of sulfur was evaluated as "Yes", and in the case where the endothermic peak of sulfur was not confirmed, the endothermic peak of sulfur was evaluated as "No". The measurement was performed in an environment not exposed to the air.

Device name: DSC 3300 manufactured by BRUKER AXS, sample amount: 20 mg, temperature-rising rate: 5°C/min, measurement temperature range: 25°C to 300°C.

(Measurement of Lithium Ion Conductivity)

Using 100 mg of a powder of a sulfide solid electrolyte, a green compact (pellet 1) having a diameter of 1 cm was produced at a pressure of 10 kN. Similarly, a green compact (pellet 2) having a diameter of 1 cm was produced at a pressure of 30 kN.

The lithium ion conductivity of each of the pellets was measured at 25°C by an AC impedance method (manufactured by Bio-Logic Sciences Instruments, potentiostat/galvanostat VSP, measurement frequency: 1 MHz to 100 Hz). A ratio $\sigma$ (30 kN)/$\sigma$ (10 kN) of a lithium ion conductivity $\sigma$ (30 kN) of the pellet 2 to a lithium ion conductivity $\sigma$ (10 kN) of the pellet 1 is shown in Table 1.

In addition, $\sigma$ (30 kN) is shown in Table 1 as the lithium ion conductivity of each sulfide solid electrolyte.

[Example 1]

A lithium sulfide powder (manufactured by Sigma Corporation, purity: 99.98%), a phosphorus pentasulfide powder (manufactured by Sigma Corporation, purity: 99%), sulfur (manufactured by Sigma Corporation, purity: 99.99%), and a lithium chloride powder (manufactured by Sigma Corporation, purity: 99.99%) were weighed in a dry nitrogen atmosphere as a target composition of $Li_6PS_{5.3}Cl$ (sulfur excess) so that a gas atmosphere containing a sulfur element was obtained during heating and melting, and were mixed in the same atmosphere at 400 rpm for 4 hours using a planetary ball mill.

(Heating and Melting Step)

The obtained raw material mixture was charged into a heat-resistant container, and melted by heating at 750°C for 1 hour in an atmosphere having a dew point of -60°C.

(Cooling Step)

Thereafter, cooling was performed at a cooling rate of 1°C/sec to 1,000°C/sec to obtain a solid as a sulfide solid electrolyte containing an amorphous phase and an argyrodite crystal phase. A solid electrolyte having a composition of $Li_{6.01}PS_{5.25}Cl_{0.99}$ was obtained, and pulverized in an agate mortar to obtain a powder having an average particle diameter of 5 $\mu$m.

[Example 2]

As a target composition of $Li_6PS_5Cl$, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed under a dry nitrogen atmosphere, and heated at 300°C for 1 hour under the same atmosphere.

(Heating and Melting Step)

The obtained compound was charged into a heat-resistant container and melted by heating at 730°C for 30 minutes in an atmosphere having a dew point of -60°C. At this time, a sulfur gas obtained by heating the elemental sulfur at a temperature of 350°C was supplied so that the partial pressure of the sulfur gas became 0.1 atm while accompanying $N_2$ as a carrier gas to obtain a gas atmosphere containing the sulfur element, and sulfur was introduced into the molten solution by performing heating and melting under the gas atmosphere. The content of the sulfur gas in the gas atmosphere containing the sulfur element was 0.1 vol%.

(Cooling Step)

Thereafter, cooling was performed at a cooling rate of 1°C/sec to 1,000°C/sec to obtain a solid as a sulfide solid electrolyte containing an amorphous phase and an argyrodite crystal phase. A sulfide solid electrolyte having a composition of $Li_{6.05}PS_{6.04}Cl_{1.11}$ was obtained and pulverized in an agate mortar to obtain a powder having an average particle diameter of 5 $\mu$m.

[Example 3]

A sulfide solid electrolyte of $Li_{5.45}PS_{4.72}Cl_{1.70}$ was obtained In the same manner as in Example 1 except that the mixing ratio of the raw materials was changed. The mixing ratio of the raw materials was defined as sulfur excess so as to obtain a gas atmosphere containing a sulfur element during heating and melting. A powder obtained after performing pulverization in the same manner as in Example 1 had an average particle diameter of 4 $\mu$m.

[Example 4]

A sulfide solid electrolyte of $Li_{5.47}PS_{4.79}Cl_{1.72}$ was obtained In the same manner as in Example 2 except that the mixing ratio of the raw materials was changed. A powder obtained after performing pulverization in the same manner as in Example 2 had an average particle diameter of 4 $\mu$m.

[Example 5]

A sulfide solid electrolyte of $Li_{5.52}PS_{4.89}Cl_{1.01}Br_{0.63}$ was obtained In the same manner as in Example 2 except that the mixing ratio of the raw materials was changed. A powder obtained after performing pulverization in the same manner as in Example 2 had an average particle diameter of 5 $\mu$m.

[Example 6]

Raw materials were prepared in the same manner as in Example 1 except that the mixing ratio of the raw materials was changed. The mixture was charged into a carbon container and heated and fired for 5 hours under a condition of a temperature of 550°C in a sealed state to cause a solid phase reaction. A sulfide solid electrolyte of $Li_{5.94}PS_{4.94}Cl_{1.05}$ was obtained. The temperature rising/lowering rate was 5°C/min. The obtained sulfide solid electrolyte was pulverized using an agate mortar. The obtained powder had an average particle diameter of 6 $\mu$m.

[Example 7]

A sulfide solid electrolyte of $Li_{5.40}PS_{4.37}Cl_{1.63}$ was obtained In the same manner as in Example 6 except that the mixing ratio of the raw materials was changed. A powder obtained after performing pulverization in the same manner as in Example 6 had an average particle diameter of 6 $\mu$m.

[Example 8]

A sulfide solid electrolyte of $Li_6PS_5Cl+S_{0.5}$ was obtained in the same manner as in Example 6 except that a sulfur powder was added before heating and firing.

A powder obtained after performing pulverization in the same manner as in Example 6 had an average particle diameter of 5 μm.

[Example 9]

Raw materials were prepared in the same manner as in Example 1. The raw materials were vacuum-sealed in a carbon-coated quartz tube and heated at 550°C for 5 hours to cause a solid phase reaction. Further, the thus-obtained product was taken out, pelletized, and again vacuum-sealed in a carbon-coated quartz tube, and subjected to a heat treatment at 650°C for 30 minutes, thereby obtaining a sulfide solid electrolyte of $Li_{6.11}PS_{4.83}Cl_{1.07}$. The obtained sulfide solid electrolyte was pulverized using an agate mortar. A powder obtained after pulverization had an average particle diameter of 5 μm.

As a result of the XRD measurement, the sulfide solid electrolytes obtained in Examples 1 to 9 all had an argyrodite crystal structure. The compositions of the crystal structures of the examples determined by the composition analysis are shown in Table 1. The results of the Raman spectroscopy measurement, the DSC measurement, and the lithium ion conductivity measurement for the sulfide solid electrolytes of the examples are shown in Table 1.

Table 1

|  | Composition | Binding peak of $S_8$ in Raman spectrum | Endothermic peak of sulfur in DSC curve | Lithium ion conductivity (mS/cm) | σ (30 kN)/ σ (10 kN) | Raman peak ratio ($I_B/I_A$) |
|---|---|---|---|---|---|---|
| Ex. 1 | $Li_{6.01}PS_{5.25}Cl_{0.99}$ | Yes | No | 3.1 | 1.231 | 0.023 |
| Ex. 2 | $Li_{6.05}PS_{6.04}Cl_{1.11}$ | Yes | No | 2.8 | 1.312 | 0.012 |
| Ex. 3 | $Li_{5.45}PS_{4.72}Cl_{1.70}$ | Yes | No | 6.5 | 1.114 | 0.100 |
| Ex. 4 | $Li_{5.47}PS_{4.79}Cl_{1.72}$ | Yes | No | 7.3 | 1.229 | 0.075 |
| Ex. 5 | $Li_{5.52}PS_{4.89}Cl_{1.01}Br_{0.63}$ | Yes | No | 5.2 | 1.195 | 0.049 |
| Ex. 6 | $Li_{5.94}PS_{4.94}Cl_{1.05}$ | No | No | 2.6 | 1.374 | - |
| Ex. 7 | $Li_{5.40}PS_{4.37}Cl_{1.63}$ | No | No | 3.5 | 1.341 | - |
| Ex. 8 | $Li_6PS_5Cl+S_{0.5}$ | Yes | Yes | 2.4 | 1.447 | 0.107 |
| Ex. 9 | $Li_{6.11}PS_{4.83}Cl_{1.07}$ | No | No | 1.1 | 1.605 | - |

The sulfide solid electrolytes in Examples 1 to 5 that are inventive examples are considered to have a structure in which Ss molecules are uniformly dispersed in an argyrodite crystal structure because an Ss binding peak is confirmed in the Raman spectrum and an endothermic peak attributed to phase transition or melting of sulfur is not confirmed in the DSC curve. On the other hand, regarding the sulfide solid electrolytes in Examples 6, 7, and 9 that are comparative examples, an Ss binding peak is not confirmed in the Raman spectrum, and it is considered that sulfur in the Ss state is not contained. In addition, regarding the sulfide solid electrolyte in Example 8, an Ss binding peak was confirmed in the Raman spectrum, but an endothermic peak of sulfur was also confirmed in the DSC curve. Therefore, it is considered that although the sulfide solid electrolyte in Example 8 contains $S_8$ molecules, the Ss molecules are not dispersed in the crystal structure and are separated from the crystal structure to exist as a group of the $S_8$ molecules.

In Examples 1 to 5 that are inventive examples, the σ (30 kN)/σ (10 kN) was smaller than that in Examples 6 to 9 that are comparative examples, and the adhesion when the solid electrolyte was formed into a green compact from a powder state was good. Accordingly, when Examples and Comparative Examples in which the kind of Ha was the same (Cl) and the content ratios were close to each other, that is, Examples 1 and 2 and Examples 6, 8, and 9, or Examples 3 and 4 and Example 7 were compared with each other, the lithium ion conductivity of the green compact was more excellent in Examples. In the case where the present solid electrolyte is processed into a green compact having a pellet shape, a layer shape (sheet shape), or the like, and is used for a lithium-ion secondary battery or the like, an improvement in battery characteristics of the lithium-ion secondary battery can be expected.

Although the present invention has been described in detail with reference to specific embodiments, it is apparent to those skilled in the art that various changes and modifications can be made without departing from the spirit and scope of the present invention. The present application is based on Japanese Patent Application No. 2020-188040 filed on November 11, 2020, the contents of which are incorporated herein by reference.

**Claims**

1.  A sulfide solid electrolyte to be used in a lithium-ion secondary battery, the sulfide solid electrolyte comprising

    an argyrodite crystal structure comprising Li, P, S, and Ha, wherein
    Ha is at least one selected from the group consisting of F, Cl, Br, and I,
    the sulfide solid electrolyte has a peak in at least one selected from the group consisting of 140 cm$^{-1}$ to 170 cm$^{-1}$, 205 cm$^{-1}$ to 235 cm$^{-1}$, and 460 cm$^{-1}$ to 490 cm$^{-1}$ in a Raman spectrum obtained by Raman spectroscopy measurement, and
    the sulfide solid electrolyte does not have an endothermic peak within a range of 70°C to 160°C in a DSC curve obtained by differential scanning calorimetry.

2.  The sulfide solid electrolyte according to claim 1, wherein the argyrodite crystal structure has a composition represented by $Li_aPS_bHa_c$ (where $5 \leq a \leq 7$, $4 \leq b \leq 6$, and $0 < c \leq 2$).

3.  The sulfide solid electrolyte according to claim 1 or 2, wherein a ratio $I_B/I_A$ of a peak intensity ($I_A$) at 420 cm$^{-1}$ to 440 cm$^{-1}$ to a peak intensity ($I_B$) at 460 cm$^{-1}$ to 490 cm$^{-1}$ in the Raman spectrum is 0.005 or more.

4.  The sulfide solid electrolyte according to any one of claims 1 to 3, wherein when the sulfide solid electrolyte is in a state of a powder having an average particle diameter of 2 $\mu$m to 10 $\mu$m,
    a ratio $\sigma$ (30 kN)/$\sigma$ (10 kN) of a lithium ion conductivity $\sigma$ (30 kN) at 25°C when the powder is formed into a green compact under a pressure of 30 kN to a lithium ion conductivity $\sigma$ (10 kN) at 25°C when the powder is formed into a green compact at a pressure of 10 kN is 1.34 or less.

5.  The sulfide solid electrolyte according to any one of claims 1 to 4, having an elastic modulus of 5 GPa to 40 GPa.

6.  A solid electrolyte layer comprising the sulfide solid electrolyte according to any one of claims 1 to 5.

7.  A lithium-ion secondary battery comprising the sulfide solid electrolyte according to any one of claims 1 to 5.

## INTERNATIONAL SEARCH REPORT

| International application No. |
| --- |
| **PCT/JP2021/040790** |

**A. CLASSIFICATION OF SUBJECT MATTER**

*H01M 10/0562*(2010.01)i; *C01B 25/10*(2006.01)i; *C01B 25/14*(2006.01)i; *H01B 1/06*(2006.01)i; *H01B 1/10*(2006.01)i
FI:   H01M10/0562; H01B1/06 A; H01B1/10; C01B25/14; C01B25/10

According to International Patent Classification (IPC) or to both national classification and IPC

**B. FIELDS SEARCHED**

Minimum documentation searched (classification system followed by classification symbols)
    H01M10/0562; C01B25/10; C01B25/14; H01B1/06; H01B1/10

Documentation searched other than minimum documentation to the extent that such documents are included in the fields searched

    Published examined utility model applications of Japan 1922-1996
    Published unexamined utility model applications of Japan 1971-2021
    Registered utility model specifications of Japan 1996-2021
    Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-145299 A (SAMSUNG ELECTRONICS CO., LTD.) 29 August 2019 (2019-08-29) | 1-7 |
| A | JP 2019-114525 A (HYUNDAI MOTOR COMPANY CO LTD) 11 July 2019 (2019-07-11) | 1-7 |
| A | US 2020/0087155 A1 (BLUE CURRENT, INC.) 19 March 2020 (2020-03-19) | 1-7 |
| A | CN 111916738 A (HYUNDAI MOTOR COMPANY) 10 November 2020 (2020-11-10) | 1-7 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2021** | **07 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/040790**

| Patent document cited in search report | | | Publication date (day/month/year) | Patent family member(s) | | | Publication date (day/month/year) |
|---|---|---|---|---|---|---|---|
| JP | 2019-145299 | A | 29 August 2019 | US | 2019/0260065 | A1 | |
| | | | | KR | 10-2019-0100078 | A | |
| JP | 2019-114525 | A | 11 July 2019 | US | 2019/0190007 | A1 | |
| | | | | EP | 3502051 | A1 | |
| | | | | KR | 10-2019-0074484 | A | |
| | | | | CN | 109942008 | A | |
| US | 2020/0087155 | A1 | 19 March 2020 | WO | 2020/061354 | A1 | |
| | | | | EP | 3837215 | A1 | |
| CN | 111916738 | A | 10 November 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015012042 A

- JP 2020188040 A